# EUROPEAN PATENT APPLICATION

(11) **EP 4 572 373 A1**
(43) Date of publication of application: **18.06.2025**
(21) Application number: 24201992.5
(22) Date of filing: 23.09.2024
(51) Int. Cl.: H04W 24/02, H04W 16/20, H04W 84/12

(54) **WIRELESS ACCESS POINT DEPLOYMENT METHOD, APPARATUS, ELECTRONIC DEVICE AND READABLE STORAGE MEDIUM**

(30) Priority: 13.12.2023 CN 202311714814
(71) Applicant: Beijing Xiaomi Mobile Software Co., Ltd., Beijing 100085 (CN)
(72) Inventor: CHEN, Weiyang, Beijing (CN); GUO, Shaolong, Beijing (CN)
(74) Representative: Dehns Germany Partnerschaft mbB

(57) **Abstract**

The present invention relates to a wireless access point deployment method, apparatus, electronic device, and readable storage medium. The method includes: in a process of a mobile robot traveling along a moving path determined by an environment map, detecting wireless signal coverage information of each moving position in the moving path, where the wireless signal coverage information is used to generate a wireless signal coverage map of an environment where the mobile robot is currently located, and the wireless signal coverage map is used to update a deployment position of the wireless access point in the environment.

## Description

### TECHNICAL FIELD

The present invention relates to the technical field of wireless network, and in particular, to a wireless access point deployment method, apparatus, electronic device and readable storage medium.

### BACKGROUND

A wireless access point (AP) is an access point for users using wireless devices (mobile devices such as mobile phones and wireless devices such as laptops) to enter the wired network, and is an important component for building a wireless network.

### SUMMARY

This Summary is provided to introduce a selection of aspects of the present invention in a simplified form that are further described below in the Detailed Description. This Summary is not intended to identify key features or essential features of the claimed subject matter, nor is it intended to be used to limit the scope of the claimed subject matter.

The present invention provides a wireless access point deployment method, apparatus, electronic device and readable storage medium.

A first aspect of the present invention provides a wireless access point deployment method, the method is applied to a mobile robot and includes:
in a process of the mobile robot traveling along a moving path determined by an environment map, detecting wireless signal coverage information of each moving position in the moving path; where the wireless signal coverage information is used to generate a wireless signal coverage map of an environment where the mobile robot is currently located; and the wireless signal coverage map is used to update a deployment position of the wireless access point in the environment.

A second aspect of the present invention provides a wireless access point deployment method, where the method is applied to a wireless access point, and includes:
acquiring wireless signal coverage information detected by a mobile robot at each moving position during movement; and
determining a wireless signal coverage map of an environment where the mobile robot is currently located based on the wireless signal coverage information detected at each moving position; where the wireless signal coverage map is used to update a deployment position of the wireless access point in the environment.

A third aspect of the present invention provides a wireless access point deployment method, where the method is applied to a terminal device, and includes:
acquiring a wireless signal coverage map of an environment where a mobile robot is currently located; where the wireless signal coverage map is determined by wireless signal coverage information detected by the mobile robot at each moving position during movement; and
displaying the wireless signal coverage map; where the wireless signal coverage map is used to update a deployment position of the wireless access point in the environment.

A fourth aspect of the present invention provides a wireless access point deployment apparatus, where the apparatus is applied to a mobile robot, and includes:
a detection module, configured to, in a process of the mobile robot traveling along a moving path determined by an environment map, detect wireless signal coverage information of each moving position in the moving path;
where the wireless signal coverage information is used to generate a wireless signal coverage map of an environment where the mobile robot is currently located; and the wireless signal coverage map is used to update a deployment position of the wireless access point in the environment.

The wireless access point deployment apparatus according to the fourth aspect is especially configured to carry out and/or comprises corresponding modules for carrying out the wireless access point deployment method and all embodiments according to the first aspect, especially according to claims 1 to 4.

A fifth aspect of the present invention provides a wireless access point deployment apparatus, where the apparatus is applied to a wireless access point, and includes:
a first acquisition module, configured to acquire wireless signal coverage information detected by a mobile robot at each moving position during movement; and
a determination module, configured to determine a wireless signal coverage map of an environment where the mobile robot is currently located based on the wireless signal coverage information detected at each moving position; where the wireless signal coverage map is used to update a deployment position of the wireless access point in the environment.

The wireless access point deployment apparatus according to the fifth aspect is especially configured to carry out and/or comprises corresponding modules for carrying out the wireless access point deployment method and all embodiments according to the second aspect, especially according to claims 5 to 8.

A sixth aspect of the present invention provides a wireless access point deployment apparatus, where the apparatus is applied to a terminal device, and includes:
a second acquisition module, configured to acquire a wireless signal coverage map of an environment where a mobile robot is currently located; where the wireless signal coverage map is determined by wireless signal coverage information detected by the mobile robot at each moving position during movement; and
a display module, configured to display the wireless signal coverage map; where the wireless signal coverage map is used to update a deployment position of the wireless access point in the environment.

The wireless access point deployment apparatus according to the sixth aspect is especially configured to carry out and/or comprises corresponding modules for carrying out the wireless access point deployment method and all embodiments according to the third aspect, especially according to claims 9 to 12.

A seventh aspect of the present invention provides an electronic device, including:
a memory, configured to store instructions executable by a processor;
the processor, connected to the memory;
where the processor is configured to execute the wireless access point deployment method according to any embodiment in the first aspect, the second aspect, and the third aspect of the present invention.

An eighth aspect of the present invention provides a non-transitory computer-readable storage medium, where when instructions in the storage medium are executed by a processor of an electronic device, the electronic device is enabled to execute the wireless access point deployment method according to any embodiment in the first aspect, the second aspect, and the third aspect of the present invention.

The technical solutions provided by the embodiments of the present invention may include the following beneficial effects.

In the implementations of the present invention, by detecting the wireless signal coverage information of each moving position in the moving path while the mobile robot is traveling along the moving path, the wireless signal coverage information of any position in the current environment is determined. Based on the wireless signal coverage information of each position in the current environment, a wireless signal coverage map of the current environment can be generated, and based on the wireless signal coverage map, the position of the wireless access point in the current environment can be evaluated to determine whether to update the position of the current wireless access point, thereby achieving a reasonable deployment of the wireless access point.

It is to be understood that both the foregoing general description and the following detailed description are exemplary and explanatory only and are not restrictive of the present invention.

### BRIEF DESCRIPTION OF THE DRAWINGS

The accompanying drawings, which are incorporated in and constitute a part of this specification, illustrate embodiments consistent with the present invention and, together with the specification, serve to explain the principles of the present invention.
FIG. 1 is a first schematic flowchart of a wireless access point deployment method according to an exemplary embodiment of the present invention.
FIG. 2 is a schematic diagram of an environment map according to an exemplary embodiment of the present invention.
FIG. 3 is a second schematic flowchart of a wireless access point deployment method according to an exemplary embodiment of the present invention.
FIG. 4 is a schematic diagram of a grid map according to an exemplary embodiment of the present invention.
FIG. 5 is a schematic diagram of a wireless signal coverage map according to an exemplary embodiment of the present invention.
FIG. 6 is a third schematic flowchart of a wireless access point deployment method according to an exemplary embodiment of the present invention.
FIG. 7 is a fourth schematic flow chart of a wireless access point deployment method according to an exemplary embodiment of the present invention.
FIG. 8 is a first schematic structural diagram of a wireless access point deployment apparatus according to an exemplary embodiment of the present invention.
FIG. 9 is a second schematic second structural diagram of a wireless access point deployment apparatus according to an exemplary embodiment of the present invention.
FIG. 10 is a third schematic structural diagram of a wireless access point deployment apparatus according to an exemplary embodiment of the present invention.
FIG. 11 is a block diagram of an electronic device according to an exemplary embodiment of the present invention.

### DETAILED DESCRIPTION

Reference will now be made in detail to the exemplary embodiments, examples of which are illustrated in the accompanying drawings. The following description refers to the accompanying drawings in which the same numbers in different drawings represent the same or similar elements unless otherwise represented. The implementations set forth in the following description of the exemplary embodiments do not represent all implementations consistent with the present invention. Instead, they are merely examples of apparatuses consistent with some aspects of the present invention as recited in the appended claims.

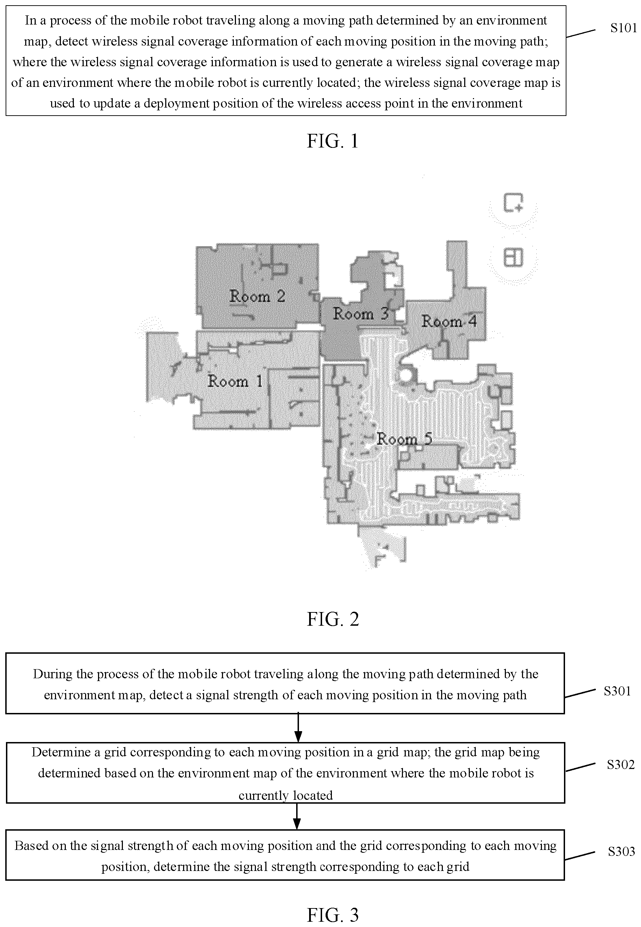

The present invention provides a wireless access point deployment method. FIG. 1 is a first schematic flowchart of a wireless access point deployment method according to an exemplary embodiment of the present invention. As shown in FIG. 1, the wireless access point deployment method is applied to a mobile robot, and includes the following steps.

In step S101, in a process of the mobile robot traveling along a moving path determined by an environment map, wireless signal coverage information of each moving position in the moving path is detected; where the wireless signal coverage information is used to generate a wireless signal coverage map of an environment where the mobile robot is currently located; the wireless signal coverage map is used to update a deployment position of the wireless access point in the environment.

In the embodiment of the present invention, the wireless access point deployment method can be applied to mobile robots, and the mobile robots can be intelligent cleaning mobile robots, intelligent patrolling mobile robots, etc., which are not specifically limited.

In step S101, during the process of the mobile robot traveling along the moving path determined by the environment map, when the mobile robot moves to each moving position of the moving path, the signal strength of the wireless signal corresponding to the current moving position can be detected by using a sensing device configured in the mobile robot.

The sensing device can at least be used to detect the intensity value of the signal strength of the wireless signal.

For example, the sensing device may be a WiFi module in the mobile robot.

It should be noted that the moving path determined based on the environment map can basically cover the environment map.

In some embodiments, the environment map may be determined based on the environmental information of the environment where the mobile robot is located.

The environmental information of the environment may include: obstacle information, building information, etc.

It can be understood that during the traveling process of the mobile robot, the sensor configured in the mobile robot can be used to acquire environmental information of the current environment; based on the environmental information, the environmental map can be constructed.

Here, the sensor may include one or more of various sensors such as a motion sensor, a laser sensor, an image sensor, etc., which is not specifically limited.

The motion sensor can be used to acquire distance data of the movement of the mobile robot or other items relative to their respective initial positions to construct an environment map. The laser sensor can be used to acquire point cloud data of the environment where the mobile robot is currently located to construct an environment map using point cloud imaging. The image sensor is used to collect images of the environment where the mobile robot is currently located to build an environment map using computer vision.

It can be understood that by constructing an environment map, the mobile robot can acquire the overall layout of the current environment and the current positioning of the mobile robot in the overall layout, which is beneficial to subsequent acquisition of the wireless signal coverage of the current environment.

Illustratively, FIG. 2 is a schematic diagram of an environment map according to an exemplary embodiment of the present invention. It can be understood that the mobile robot can build an environment map and send the environment map to the terminal device, so that the user obtains the map as shown in FIG. 2 and obtains the layout of Room 1 to Room 5.

In some embodiments, the environment map can be transmitted to the mobile robot, so that the mobile robot can complete the construction of the environment map of the current environment by receiving and reading the environment map.

Here, the terminal device may transmit the environment map to the mobile robot.

For example, the user can independently set the floor plan, building structure diagram, etc. to build an environment map based on the application program on the terminal device; when the terminal device determines that the environment map has been constructed, it can send the environment map to the mobile robot.

In some embodiments, after the mobile robot constructs the environment map, the mobile robot can determine a moving path of the mobile robot based on the environment map, so that the mobile robot can travel along the moving path determined by the environment map.

After determining the wireless signal coverage information of each moving position, the mobile robot can determine the wireless coverage information of a plurality of moving positions corresponding to the environment map based on the wireless coverage information of each moving position; based on the wireless coverage information of the plurality of the moving position corresponding to the environment map and the position information of each moving position in the environment map, a wireless signal coverage map of the environment where the mobile robot is currently located can be generated.

It can be understood that the plurality of moving positions along the moving path may substantially cover the environment map. Based on the wireless coverage information of the plurality of moving positions corresponding to the environmental map and the position information of each moving position, the wireless signal coverage information of the entire environmental map can be determined, that is, the signal strength corresponding to the entire environmental map can be determined; based on the wireless signal coverage information of the entire environment map, a wireless signal coverage map of the current environment can be generated.

The wireless signal coverage map can be used to update the deployment position of the wireless access point within the environment.

It can be understood that one pixel or an image area composed of a plurality of pixels in the wireless signal coverage map can correspond to one moving position in the environment map. When the intensity values of the signal strengths obtained at a plurality of different moving positions are different, different pixel values or different pixel features may be used to represent the signal strengths corresponding to the plurality of moving positions.

Through the wireless signal coverage map, the global wireless signal distribution can be obtained, thereby determining whether the position of the wireless access point in the current environment is reasonable, and also facilitating to determine whether the position of the current wireless access point can be updated to a better position.

In the implementation of the present invention, by detecting the wireless signal coverage information of each moving position in the moving path while the mobile robot is traveling along the moving path, the wireless signal coverage information of any position in the current environment is determined. Based on the wireless signal coverage information of each position in the current environment, a wireless signal coverage map of the current environment can be generated, and based on the wireless signal coverage map, the position of the wireless access point in the current environment can be evaluated, to determine whether to update the position of the current wireless access point, thereby achieving reasonable deployment of the wireless access point.

Optionally, FIG. 3 is a second schematic flowchart of a wireless access point deployment method according to an exemplary embodiment of the present invention. As shown in FIG. 3, detecting the wireless signal coverage information of each moving position in the moving path in a process of the mobile robot traveling along the moving path determined by the environment map in step S101, includes the following steps.

In step S301, during the process of the mobile robot traveling along the moving path determined by the environment map, a signal strength of each moving position in the moving path is detected.

In step S302, a grid corresponding to each moving position in a grid map is determined; the grid map being determined based on the environment map of the environment where the mobile robot is currently located.

In step S303, based on the signal strength of each moving position and the grid corresponding to each moving position, the signal strength corresponding to each grid is determined.

In an embodiment of the present invention, the mobile robot may detect the signal strength of each position in the moving path while traveling along the moving path determined by the environment map.

It can be understood that the mobile robot can determine the position in the moving path while collecting data by controlling the sensing device, so that the wireless signal coverage information of each moving position in the moving path can be detected.

The mobile robot can control the sensing device to collect data according to actual needs, which is not specifically limited.

In an embodiment, the mobile robot can control the sensing device to collect data at a preset time interval. The preset time interval may be one minute, three minutes, etc.

In an embodiment, the mobile robot can control the sensing device to collect data after completing a preset displacement. The preset displacement may be ten centimeters, twenty centimeters, etc.

It can be understood that the position of the mobile robot in the moving path can be determined based on the running time and running speed of the mobile robot relative to the start point; or, the position of the mobile robot in the moving path can be determined based on data collected by the sensor configured in the mobile robot. The position of the mobile robot can also be determined through other methods, which are not specifically limited.

In step S302, the mobile robot may determine the grid corresponding to each moving position in the grid map. The grid map is determined based on the environment map of the environment where the mobile robot is currently located.

It can be understood that after the mobile robot constructs the environment map, it can construct a grid map of the environment where the mobile robot is currently located based on the environment map. The environment map has a one-to-one correspondence with the grid map. Therefore, based on each corresponding moving position of the mobile robot in the environment map, the grid corresponding to each moving position in the grid map can be determined.

For example, when the mobile robot is in the first position of room 1, it can be determined that the mobile robot corresponds to grid 5 in the grid map, and grid 5 indicates the first position of room 1.

In some embodiments, the mobile robot can determine the number of rows and columns of grids based on the environment map to form a grid array; and can determine a free grid(s) and an occupied grid(s) in the grid array based on the grid array and the environmental information obtained by the environment map, to form the grid map.

The free grid may be a grid corresponding to a position without an obstacle in the current environment; the occupied grid may be a grid corresponding to a position with an obstacle in the current environment.

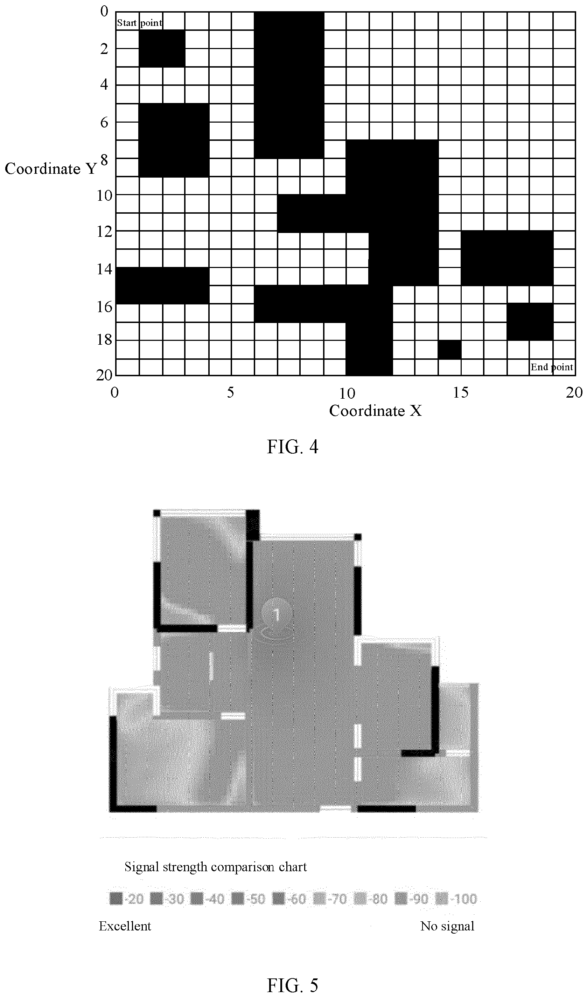

Exemplarily, FIG. 4 is a schematic diagram of a grid map according to an exemplary embodiment of the present invention. As shown in FIG. 4, it is a grid map in which coordinate X (rows) * coordinate Y (columns) are 20*20. The white grid represents the free grid, and the black grid represents the occupied grid. Meanwhile, after determining the grid map, the mobile robot can also determine the moving path based on the grid map. The moving path includes at least a start point and an end point.

It can be understood that when the mobile robot constructs an environment map based on different sensors, different methods can be used to construct the grid map.

For example, when the sensor used to construct the environment map is a laser sensor, the mobile robot may detect a three-dimensional point cloud of the currently located environment. Based on the coordinate value of each point cloud in the three-dimensional point cloud, the two-dimensional coordinate value corresponding to each point cloud in the two-dimensional plane is determined; based on the two-dimensional coordinate value, the grid map is constructed.

For example, when the sensor used to construct the environment map is an image sensor, the mobile robot may obtain a plurality of images when being at different positions, and calculate the feature point of the currently located environment using the computer vision. Based on the feature point, the grid map is constructed.

In step S303, after the mobile robot obtains the signal strength of each moving position through step S301 and determines the corresponding grid of each moving position in the grid map through step S302, the mobile robot can associate the signal strength of each moving position with the grid corresponding to this position to determine the signal strength corresponding to each grid.

In some embodiments, when one grid corresponds to one moving position, the signal strength of the one moving position may be determined to be the signal strength of the one grid.

In some embodiments, when one grid corresponds to a plurality of moving positions, the average signal strength of the plurality of moving positions can be determined; the intensity value of the average signal strength is determined as the signal strength of the one grid.

In the embodiment of the present invention, by constructing the grid map and associating the signal strength of each moving position into the grid map, the wireless signal coverage information of each position in the environment can be obtained.

Optionally, the method also includes:
based on the intensity value of the signal strength corresponding to each grid in the grid map, generating a wireless signal coverage heat map corresponding to the grid map;
superimposing the wireless signal coverage heat map with the environment map to obtain the wireless signal coverage map of the environment where the mobile robot is currently located.

In an embodiment of the present invention, the mobile robot can generate the wireless signal coverage heat map corresponding to the grid map based on the intensity value of the signal strength corresponding to each grid in the grid map and the position information of each grid in the grid map. Subsequently, the wireless signal coverage heat map is superimposed on the environment map to obtain the wireless signal coverage map of the environment where the mobile robot is currently located.

The wireless signal coverage heat map may indicate the signal strength corresponding to any grid in the grid map. The wireless signal coverage map may indicate the intensity values of the signal strengths at all positions in the environment where the mobile robot is currently located.

In an embodiment, the wireless signal coverage map may be a WiFi heat map. The WiFi heat map can indicate different signal strengths through different colors.

Exemplarily, FIG. 5 is a schematic diagram of a wireless signal coverage map according to an exemplary embodiment of the present invention. As shown in FIG. 5, the wireless signal coverage map can display the wireless signal strength at any position in the current environment through different display features (such as colors).

In some embodiments, when the wireless signal coverage heat map is superimposed with the environment map, the area corresponding to each grid can also be scaled to reduce system noise during the map collection process. Alternatively, the intensity values of the signal strengths corresponding to a plurality of adjacent grids can also be blurred to reduce the impact of abnormal data on the acquired wireless signal coverage map.

In some embodiments, after the mobile robot obtains the wireless signal coverage map, it can also send the wireless signal coverage map to the terminal device, so that the terminal device can receive and display the wireless signal coverage map, and the user can intuitively perceive the wireless signal deployment situation in the current environment, so as to facilitate the user to adjust the wireless access point to meet the user's requirement.

In some embodiments, the wireless access point deployment method further includes:
based on the intensity value of the signal strength corresponding to each grid, determining whether each grid is a target grid; the signal strength corresponding to the target grid being less than a usage requirement of the signal strength of the wireless network; based on the position information of the target grid in the grid map, determining whether there is a plurality of adjacent target grids forming a target area; when it is determined that the target area is formed, generating prompt information corresponding to the target area.

The prompt information may indicate that the target area is a target deployment position of the wireless access point. The target deployment position indicates an accessible position of the wireless access point.

Here, the prompt information may be output in various forms that can be received by the user, for example, a prompt label.

In some embodiments, the wireless access point deployment method further includes:
acquiring a first grid corresponding to the wireless access point in the current environment in the grid map; determining a second grid based on the position information of the first grid and the strength value of the signal strength corresponding to each grid; generating prompt information corresponding to the second grid.

The prompt information may indicate that the second grid is a target deployment position of the wireless access point. The target deployment position indicates a movable position of the wireless access point.

In an embodiment, determining the second grid based on the position information of the first grid and the intensity value of the signal strength corresponding to each grid includes:
based on coordinates of all edges of the grid map, determining a center coordinate of the grid map; determining one grid corresponding to the center coordinate as a reference grid of the grid map; acquiring a first grid group in a first direction and a second grid group in a second direction relative to the reference grid, where the first direction is opposite to the second direction; acquiring a difference between the average signal strength corresponding to the first grid group and the average signal strength corresponding to the second grid group; based on the difference, determining a moving direction and a step size of the first grid; based on the position information and the moving direction and step length of the first grid, determining the second grid.

For example, as shown in FIG. 5, prompt label 1 is used to indicate that the wireless access point in the current environment can move to the position corresponding to prompt label 1, which is the preferred position of the wireless access point.

It should be noted that in order to reduce the transmission delay caused by data transmission between different devices, the above data processing steps such as generating the wireless signal coverage heat map corresponding to the grid map, obtaining the wireless signal coverage map of the environment where the mobile robot is currently located, generating the prompt information corresponding to the target area, and generating the prompt information corresponding to the second grid are preferably executed in the mobile robot. The above data processing steps can also be configured to be executed in other devices with computing capabilities, such as servers, terminal devices, etc., which are not specifically limited in the embodiments of the present invention.

In the embodiment of the present invention, the wireless signal coverage map corresponding to the grid map and the environment map are superimposed, and the wireless signal coverage map of the current environment where the mobile robot is located can be determined, so that the wireless signal coverage map can be visually observed.

Optionally, the method also includes:
in response to an update instruction for the wireless signal coverage map, redetermining the signal strength corresponding to each grid in the grid map;
based on the redetermined grid map, updating the wireless signal coverage map.

In the embodiment of the present invention, the mobile robot may also, in response to the update instruction for the wireless signal coverage map, re-execute the steps in one or more embodiments corresponding to step S101 to redetermine the signal strength corresponding to each grid in the grid map. Subsequently, based on the redetermined grid map, the mobile robot may update the wireless signal coverage map.

For the sake of brevity of the description, one or more embodiments corresponding to step S101 will not be described again here.

In some embodiments, when the mobile robot detects the signal strength corresponding to one grid, the detected signal strength can be compared with the signal strength in the original grid map. If the intensity values of the signal strengths are different, the original signal strength is replaced with the new detected signal strength.

In some embodiments, the update instruction may be an instruction with a preset time interval, and the preset time interval may be one hour, one day, etc., which is not specifically limited.

In the embodiment of the present invention, the wireless signal coverage map can be updated by redetermining the signal strength corresponding to each grid, and the wireless signal coverage can be monitored in real time to meet the user's usage needs.

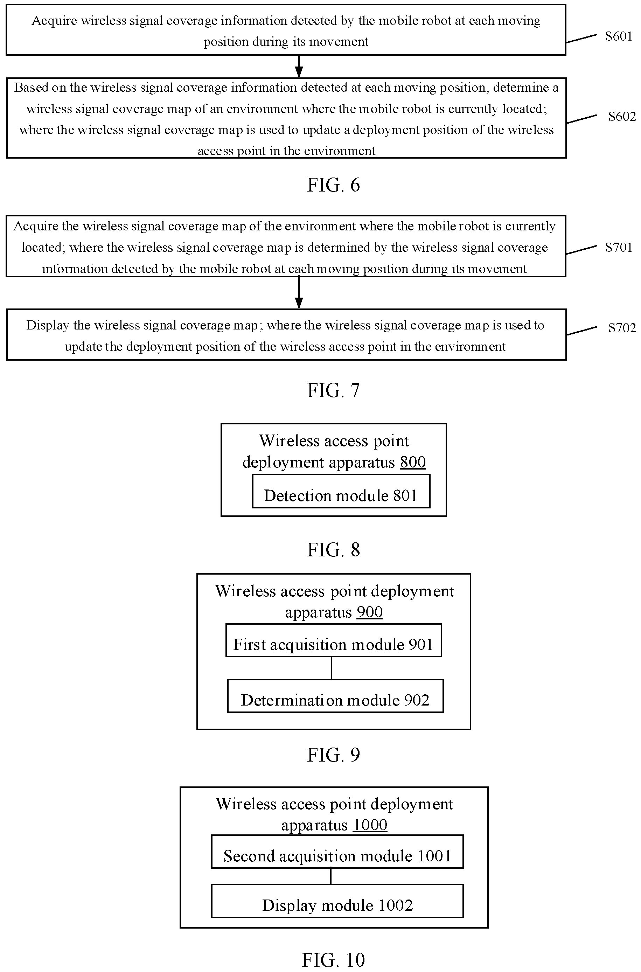

The present invention provides a wireless access point deployment method. FIG. 6 is a third schematic flowchart of a wireless access point deployment method according to an exemplary embodiment of the present invention. As shown in FIG. 6, the wireless access point deployment method is applied to a wireless access point and includes the following steps.

In step S601, wireless signal coverage information detected by the mobile robot at each moving position during its movement is acquired.

In step S602, based on the wireless signal coverage information detected at each moving position, a wireless signal coverage map of an environment where the mobile robot is currently located is determined; where the wireless signal coverage map is used to update a deployment position of the wireless access point in the environment.

In the embodiment of the present invention, the wireless access point deployment method may be applied to the wireless access point. The wireless access point is a device that provides a wireless access service in a wireless network, can provide data access, and allows a wireless terminal to access. It should be noted that the wireless access point may be a router.

The wireless access point and the mobile robot may be connected through a network. The wireless access point and the corresponding terminal device may be connected through the network. The terminal device may be a smart phone, a computer, etc.

In step S601, the wireless access point may establish a connection with the mobile robot and acquire the wireless signal coverage information detected by the mobile robot at each moving position during its movement.

In some embodiments, before determining the wireless signal coverage information detected at each moving position, the mobile robot can construct an environment map of the environment where the mobile robot is currently located, and based on the mobile robot traveling along the moving path determined by the environment map, the wireless signal coverage information of each moving position in the moving path is detected.

It should be noted that the process of constructing an environment map and detecting the wireless signal coverage information may refer to the descriptions in the embodiments corresponding to FIGs. 1 to 5. For the sake of brevity of the description, details will not be described again.

In step S602, the wireless access point may determine the wireless signal coverage map of the environment where the mobile robot is currently located based on the wireless signal coverage information detected at each moving position.

It can be understood that the wireless signal coverage information can at least indicate signal strengths at different positions in the environment. Based on the signal strengths at different positions, the signal strength at any position in the environment where the mobile robot is currently located can be determined, thereby the wireless signal coverage map can be constructed.

Based on the wireless signal coverage map, the global wireless signal distribution can be obtained, thereby determining whether the position of the wireless access point in the current environment is reasonable, and also making it easy to determine whether the current position of the wireless access point may be updated to a more optimal position.

In the implementation of the present invention, the wireless access point can generate a wireless signal coverage map of the current environment by acquiring the wireless signal coverage information of the mobile robot at any position in the current environment, and based on the wireless signal coverage map, it can evaluate the position of the wireless access point in the current environment to determine whether to update the current position of the wireless access point, thereby achieving reasonable deployment of the wireless access point.

Optionally, in step S602, determining the wireless signal coverage map of the environment where the mobile robot is currently located based on the wireless signal coverage information detected at each moving position includes:
acquiring a grid map corresponding to the environment where the mobile robot is currently located;
based on the wireless signal coverage information detected at each moving position, determining an intensity value of the signal strength corresponding to each grid in the grid map, and generating a wireless signal coverage heat map corresponding to the grid map;
superimposing the wireless signal coverage heat map with the environment map to obtain the wireless signal coverage map of the environment where the mobile robot is currently located.

In an embodiment of the present invention, the wireless access point may be connected to the mobile robot to acquire a grid map corresponding to the current environment determined by the mobile robot.

For the step of the mobile robot determining the grid map, reference may be made to the description in step S302. For the sake of simplicity of the description, details will not be described here again.

In some embodiments, the wireless access point can also acquire the environmental information detected by the mobile robot, and based on the environmental information, construct an environment map of the current environment; based on the environmental map, the grid map can be constructed.

Here, the method of constructing the environment map and the method of constructing the grid map may refer to the descriptions in step S 101 and step S302. For the sake of simplicity of the description, they will not be described again here.

The wireless access point can determine the intensity value of the signal strength corresponding to each grid in the grid map based on the wireless signal coverage information detected at each moving position, and generate a wireless signal coverage heat map corresponding to the grid map; and superimposes the wireless signal coverage heat map with the environment map to obtain the wireless signal coverage map of the environment where the mobile robot is currently located.

The wireless signal coverage heat map may indicate the signal strength corresponding to any grid in the grid map. The wireless signal coverage map may indicate the intensity values of the signal strengths at all positions in the environment where the mobile robot is currently located.

In some embodiments, after the wireless access point obtains the wireless signal coverage map, it can also send the wireless signal coverage map to the terminal device, so that the terminal device can receive and display the wireless signal coverage map, and the user can intuitively perceive the wireless signal deployment situation in the current environment, making it easier for the user to adjust the wireless access point to meet the user's needs.

In the implementation of the present invention, the wireless access point can determine the wireless signal coverage map of the environment where the mobile robot is currently located by superimposing the wireless signal coverage map corresponding to the grid map and the environment map, so that the wireless signal coverage map can be visually observed.

Optionally, the method also includes:
if the current deployment position of the wireless access point does not meet the signal coverage requirement, generating prompt information, where the prompt information is used to indicate to update the deployment position of the wireless access point.

In an embodiment of the present invention, the wireless access point can determine the signal strength of each position in the environment based on the wireless signal coverage map; thereby determining whether the current deployment position of the wireless access point in the environment meets the signal coverage requirement based on the signal strengths of all positions.

The signal coverage requirement may be determined based on the usage requirement of the wireless network, and is not specifically limited.

For example, the signal coverage requirement may require that the signal intensity values of the signal strengths at all positions are greater than -70 dBm.

In some implementations, the signal coverage requirement may be determined according to restriction information input by the user.

For example, the user may input to the terminal device restriction information that controls the signal in room 1 to be stronger than that in room 2, thereby generating corresponding signal coverage requirement.

If the current deployment position of the wireless access point does not meet the signal coverage requirement, prompt information is generated. The prompt information is used to indicate updating the deployment position of the wireless access point.

It can be understood that if the current deployment position of the wireless access point does not meet the signal coverage requirement, for example, the wireless access point detects that within the environmental range corresponding to the wireless signal coverage map, the signal strength value in some areas is -80dBm, which does not satisfy that the strength values of the signal strengths at all positions are greater than -70dBm, then prompt information can be generated.

After generating the prompt information, the wireless access point may send the prompt information to the terminal device to output the prompt information through the terminal device.

Here, the terminal device may output the prompt information in various forms that can be received by the user, such as screen display, voice broadcast, light flashing, etc.

In the embodiment of the present invention, the wireless access point can determine whether the current deployment position of the wireless access point meets the signal coverage requirement based on the wireless signal coverage map, and generate prompt information when the signal coverage requirement is not met, for indicating the user to update the deployment position of the wireless access point, so that the user can reasonably set the position of the wireless access point in the current environment to meet the user's usage demand for the wireless network.

Optionally, if the current deployment position of the wireless access point does not meet the signal coverage requirement, generating prompt information, includes:
if the current deployment position of the wireless access point does not meet the signal coverage requirement, determining the signal strengths of a plurality of positions in the environment based on the wireless signal coverage map;
according to the signal strengths of the plurality of positions in the environment, determining a target deployment position of the wireless access point, and generating the prompt information. The prompt information is used to indicate the target deployment position of the wireless access point.

In the embodiment of the present invention, if the wireless access point determines that the current deployment position does not meet the signal coverage requirement, the wireless access point can determine the signal strength of a plurality of positions in the environment based on the wireless signal coverage map; where the signal strengths of the plurality of positions can represent the coverage state of the wireless signal in the current environment.

For example, the signal strengths of the plurality of positions may indicate that the wireless access point in the current environment is close to a first position and far away from a second position, and the first position is different from the second position.

The wireless access point may determine the target deployment position of the wireless access point based on the signal strengths of a plurality of positions in the environment, and generate prompt information.

The prompt information is used to indicate the target deployment position of the wireless access point. The target deployment position indicates an accessible position of the wireless access point, or indicates a movable position of the wireless access point.

For example, when the wireless access point determines that the wireless access point in the current environment is close to the first position and far away from the second position based on the signal strengths of the plurality of positions, the wireless access point can obtain one target deployment position, the target deployment position may be far away from the first position and close to the second position relative to the original position of the wireless access point, and the wireless access point may output generated information based on the target deployment position.

After generating the prompt information, the wireless access point may send the prompt information to the terminal device to output the prompt information through the terminal device, so that the prompt information can prompt the user to move the wireless access point from its original position to the target deployment position.

In the embodiment of the present invention, the wireless access point may also determine the position suitable for accessing the wireless access point based on the signal strengths of a plurality of positions, thereby providing the user with a more suitable deployment solution of the wireless access point to satisfy the user's usage requirement.

The present invention provides a wireless access point deployment method. FIG. 7 is a fourth schematic flowchart of a wireless access point deployment method according to an exemplary embodiment of the present invention. As shown in FIG. 7, the wireless access point deployment method is applied to a terminal device and include the following steps.

In step S701, the wireless signal coverage map of the environment where the mobile robot is currently located is acquired; where the wireless signal coverage map is determined by the wireless signal coverage information detected by the mobile robot at each moving position during its movement.

In step S702, the wireless signal coverage map is displayed; where the wireless signal coverage map is used to update the deployment position of the wireless access point in the environment.

In the embodiment of the present invention, the wireless access point deployment method can be applied to the terminal device. The terminal device and the mobile robot can be connected through a network. The terminal device and the corresponding wireless access point can be connected through a network. The terminal device may be a smartphone, a computer, etc.

In step S701, the terminal device may obtain the wireless signal coverage map of the environment where the mobile robot is currently located from the mobile robot or the wireless access point. The wireless signal coverage map is determined by the wireless signal coverage information detected by the mobile robot at each moving position during movement.

The steps for the mobile robot or the wireless access point to acquire the wireless signal coverage map may be referred to the descriptions in the corresponding embodiments of FIGs. 1 to 6. For the sake of brevity of the description, they will not be described again here.

In step S702, after acquiring the wireless signal coverage map, the terminal device may display the wireless signal coverage map.

It can be understood that based on the wireless signal coverage map displayed by the terminal device, the user can obtain the global wireless signal distribution, thereby determining whether the position of the wireless access point in the current environment is reasonable, and also conveniently determining whether the current position of the wireless access point may be updated to a better position.

In the implementation of the present invention, the terminal device acquires the wireless signal coverage map and displays the wireless signal coverage map, so that the user can update the current position of the wireless access point to a more optimal position and achieve reasonable deployment of the wireless access point.

Optionally, the method also includes:
displaying prompt information in the wireless signal coverage map; where the prompt information is used to indicate at least one of the following:
updating the deployment position of the wireless access point; or
the target deployment position of the wireless access point.

In the embodiment of the present invention, when the terminal device displays the wireless signal coverage map, the terminal device may also display the prompt information in the wireless signal coverage map.

Here, the terminal device may display the prompt information in various forms that can be received by the user, such as icon display, text display, etc.

The prompt information is used to indicate at least one of the following:
updating the deployment position of the wireless access point;
the target deployment position of the wireless access point.

It can be understood that when the deployment position of the wireless access point is not the optimal deployment position, the prompt information displayed by the terminal device may be used to instruct the user to update the deployment position of the current wireless access point.

It can be understood that the terminal device can also display the optimal deployment position to the user through a prompt message, so that the user can adjust the deployment position of the wireless access point.

Here, there may be one or more optimal deployment positions, which are not specifically limited in the embodiments of the present invention.

In some embodiments, displaying prompt information in the wireless signal coverage map includes: after receiving a prompt information display request, displaying the prompt information in the wireless signal coverage map.

It can be understood that the terminal device can receive the prompt information display request sent by the wireless access point, and the prompt information display request carries the prompt information. Based on the received prompt information, the prompt information is displayed in the wireless signal coverage map.

In some embodiments, the terminal device can also receive a prompt information display request sent by the mobile robot.

Optionally, the method also includes:
based on the wireless signal coverage map, determining whether the current deployment position of the wireless access point in the environment meets the signal coverage requirement;
displaying the prompt information in the wireless signal coverage map includes:
   if the current deployment position of the wireless access point does not meet the signal coverage requirement, displaying the prompt information in the wireless signal coverage map.

In the embodiment of the present invention, after acquiring the wireless signal coverage map, the terminal device can determine whether the current deployment position of the wireless access point meets the signal coverage requirement based on the wireless signal coverage map; if the current deployment position of the wireless access point does not meet the signal coverage requirement, prompt information is displayed in the wireless signal coverage map.

It can be understood that the terminal device can determine the distribution of signal strength in the environment based on the wireless signal coverage map; and determine whether the current deployment position of the wireless access point satisfies the signal coverage requirement based on the distribution of signal strength in the environment.

Here, the signal coverage requirement can be determined according to the usage requirement of the wireless network, and is not specifically limited.

For example, the signal coverage requirement may require that the signal strength values of the signal strengths at all positions are greater than -70 dBm.

In some implementations, the signal coverage requirement may be determined based on restriction information input by the user.

For example, the user can input to the terminal device restriction information that controls the signal in room 1 to be stronger than that in room 2, thereby generating a corresponding signal coverage requirement.

If the current deployment position of the wireless access point does not meet the signal coverage requirement, the terminal device can determine the signal strengths of a plurality of positions in the current environment based on the wireless signal coverage map, and generate prompt information based on the signal strengths of the plurality of positions and display the prompt information in the wireless signal coverage map.

The prompt information includes: prompt information for updating the deployment position of the wireless access point, or prompt information indicating the target deployment position of the wireless access point.

It should be noted that in the embodiment of the present invention, the terminal device can determine whether to generate prompt information by itself, and display the generated prompt information in the wireless signal coverage map, thereby reducing the number of data interactions between the terminal device and the mobile robot or wireless access point, saving time and improving data processing efficiency.

In the embodiment of the present invention, the terminal device can determine whether the current deployment position of the wireless access point meets the signal coverage requirement based on the wireless signal coverage map, and display prompt information when the signal coverage requirement is not met, so that the user can acquire the current wireless network environment, and the user is prompted to reasonably set the position of the wireless access point in the current environment to meet the user's needs for using the wireless network.

Optionally, if the current deployment position of the wireless access point does not meet the signal coverage requirement, displaying the prompt information in the wireless signal coverage map, includes:
if the current deployment position of the wireless access point does not meet the signal coverage requirement, determining the signal strengths of a plurality of positions in the environment based on the wireless signal coverage map;
according to the signal strengths of the plurality of positions in the environment, determining the target deployment position of the wireless access point, and outputting the prompt information, where the prompt information is used to indicate the target deployment position of the wireless access point.

In an embodiment of the present invention, if the current deployment position of the wireless access point does not meet the signal coverage requirement, the terminal device can determine the signal strengths of a plurality of positions in the environment based on the wireless signal coverage map; where the signal strengths of the plurality of positions can represent the coverage state of the wireless signal in the current environment.

For example, the signal strengths of the plurality of positions may indicate that the wireless access point in the current environment is close to a first position and far away from a second position, and the first position is different from the second position.

When the terminal device obtains the signal strengths of the plurality of positions, it can determine the target deployment position of the wireless access point based on the signal strengths of the plurality of positions, and output the prompt information. The prompt information is used to indicate the target deployment position of the wireless access point.

Here, according to the signal strengths of a plurality of positions, the method for determining the target deployment position of the wireless access point can be set according to actual needs, which is not specifically limited in the embodiments of the present invention.

For example, the target deployment position of the wireless access point may be determined based on the signal strengths and the signal coverage requirement of a plurality of positions in the environment. For example, when the signal strength value corresponding to the first position is -80dBm and the signal coverage requirement corresponding to the first position is -70dBm, it can be determined that the signal strength of the first position does not meet the signal coverage requirement, so that the target deployment position of the wireless access point can be determined at the second position; the second position is closer to the first position than the current position of the wireless access point.

In the embodiments of the present invention, the terminal device can determine the position suitable for accessing the wireless access point based on the signal strengths of a plurality of positions, thereby providing the user with a more suitable deployment solution for the wireless access point to meet the user's usage needs.

An embodiment of the present invention provides a wireless access point deployment apparatus. FIG. 8 is a first schematic structural diagram of a wireless access point deployment apparatus according to an exemplary embodiment of the present invention.

As shown in FIG. 8, the wireless access point deployment apparatus 800 is applied to a mobile robot, and includes:
a detection module 801, configured to detect wireless signal coverage information of each moving position in a moving path while the mobile robot travels along the moving path determined by an environment map; where the wireless signal coverage information is used to generate a wireless signal coverage map of an environment where the mobile robot is currently located; the wireless signal coverage map is used to update a deployment position of the wireless access point in the environment.

Optionally, the detection module 801 is further configured to:
during the process of the mobile robot traveling along the moving path determined by the environment map, detect a signal strength of each moving position in the moving path;
determine a grid corresponding to each moving position in the grid map; where the grid map is determined based on the environment map of the environment where the mobile robot is currently located;
based on the signal strength of each moving position and the grid corresponding to each moving position, determine the signal strength corresponding to each grid.

Optionally, the detection module 801 is further configured to:
based on an intensity value of the signal strength corresponding to each grid in the grid map, generate a wireless signal coverage heat map corresponding to the grid map;
superimpose the wireless signal coverage heat map with the environment map to obtain the wireless signal coverage map of the environment where the mobile robot is currently located.

Optionally, the detection module 801 is further configured to:
in response to an update instruction for the wireless signal coverage map, redetermine the signal strength corresponding to each grid in the grid map;
based on the redetermined grid map, update the wireless signal coverage map.

An embodiment of the present invention provides a wireless access point deployment apparatus. FIG. 9 is a second schematic structural diagram of a wireless access point deployment apparatus according to an exemplary embodiment of the present invention.

As shown in FIG. 9, the wireless access point deployment apparatus 900 is applied to the mobile access point, and includes:
a first acquisition module 901, configured to acquire wireless signal coverage information detected by a mobile robot at each moving position during movement;
a determination module 902, configured to determine a wireless signal coverage map of an environment where the mobile robot is currently located based on the wireless signal coverage information detected at each moving position; where the wireless signal coverage map is used to update a deployment position of the wireless access point in the environment.

Optionally, the determination module 902 is further configured to:
acquire a grid map corresponding to the environment where the mobile robot is currently located;
based on the wireless signal coverage information detected at each moving position, determine the intensity value of the signal strength corresponding to each grid in the grid map, and generate a wireless signal coverage heat map corresponding to the grid map;
superimpose the wireless signal coverage heat map with the environment map to obtain the wireless signal coverage map of the environment where the mobile robot is currently located.

Optionally, the determination module 902 is further configured to:
based on the wireless signal coverage map, determine whether a current deployment position of the wireless access point in the environment meets a signal coverage requirement;
if the current deployment position of the wireless access point does not meet the signal coverage requirement, generate prompt information, where the prompt information is used to instruct to update the deployment position of the wireless access point.

Optionally, the determination module 902 is further configured to:
if the current deployment position of the wireless access point does not meet the signal coverage requirement,
determine signal strengths of a plurality of positions in the environment based on the wireless signal coverage map;
according to the signal strengths of the plurality of positions in the environment, determine a target deployment position of the wireless access point, and generate prompt information, where the prompt information is used to indicate the target deployment position of the wireless access point.

An embodiment of the present invention provides a wireless access point deployment apparatus. FIG. 10 is a third schematic structural diagram of a wireless access point deployment apparatus according to an exemplary embodiment of the present invention. As shown in FIG. 10, the wireless access point deployment apparatus 1000 is applied to a terminal device, and includes:
a second acquisition module 1001, configured to acquire a wireless signal coverage map of an environment where the mobile robot is currently located; where the wireless signal coverage map is determined by the wireless signal coverage information detected by the mobile robot at each moving position during movement;
a display module 1002, configured to display the wireless signal coverage map; where the wireless signal coverage map is used to update a deployment position of the wireless access point in the environment.

Optionally, the display module 1002 is further configured to:
display prompt information in the wireless signal coverage map; where the prompt information is used to indicate at least one of the following:
updating the deployment position of the wireless access point;
the target deployment position of the wireless access point.

Optionally, the display module 1002 is further configured to:
based on the wireless signal coverage map, determine whether the current deployment position of the wireless access point in the environment meets the signal coverage requirement;
displaying the prompt information in the wireless signal coverage map includes:
   if the current deployment position of the wireless access point does not meet the signal coverage requirement, displaying prompt information in the wireless signal coverage map.

Optionally, the display module 1002 is further configured to:
if the current deployment position of the wireless access point does not meet the signal coverage requirement, determine signal strengths of a plurality of positions in the environment based on the wireless signal coverage map;
according to the signal strengths of the plurality of positions in the environment, determine a target deployment position of the wireless access point, and output the prompt information, where the prompt information is used to indicate the target deployment position of the wireless access point.

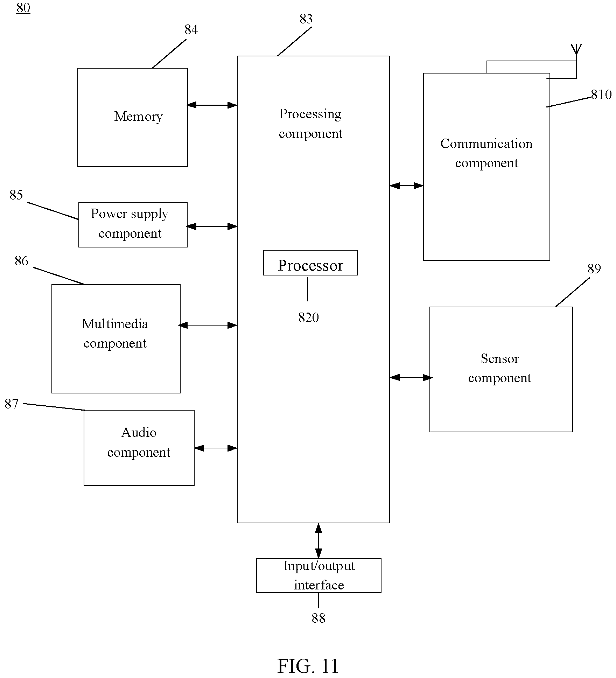

FIG. 11 is a block diagram of an electronic device according to an exemplary embodiment of the present invention. For example, the electronic device may be a server, a smart terminal, a mobile robot, etc.

Referring to FIG. 11, the electronic device 80 may include one or more of the following components: a processing component 83, a memory 84, a power supply component 85, a multimedia component 86, an audio component 87, an input/output (I/O) interface 88, a sensor component 89, and a communication component 810.

The processing component 83 typically controls overall operations of the electronic device 80, such as the operations associated with display, telephone calls, data communications, camera operations, and recording operations. The processing component 83 may include one or more processors 820 to execute instructions to perform all or part of the steps in the above described methods. Moreover, the processing component 83 may include one or more modules that facilitate the interaction between the processing component 83 and other components. For instance, the processing component 83 may include a multimedia module to facilitate the interaction between multimedia component 86 and the processing component 83.

The memory 84 is configured to store various types of data to support the operations of the electronic device 80. Examples of such data include instructions for any application or methods operated on the electronic device 80, contact data, phonebook data, messages, pictures, videos, etc. The memory 84 may be implemented by using any type of volatile or non-volatile storage devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power supply component 85 provides power to various components of the electronic device 80. The power component 85 may include a power management system, one or more power sources, and any other components associated with the generation, management, and distribution of power in the electronic device 80.

The multimedia component 86 includes a screen providing an output interface between the electronic device 80 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 86 includes a front camera and/or a rear camera. The front camera and/or the rear camera may receive an external multimedia datum while the electronic device 80 is in an operation mode, such as a photographing mode or a video mode. Each of the front camera and the rear camera may be a fixed optical lens system or have focus and optical zoom capability.

The audio component 87 is configured to output and/or input audio signals. For example, the audio component 87 includes a microphone (MIC) configured to receive an external audio signal when the electronic device 80 is in an operation mode, such as a call mode, a recording mode, and a voice recognition mode. The received audio signal may be further stored in the memory 84 or transmitted via the communication component 810. In some embodiments, the audio component 87 further includes a speaker to output audio signals.

The I/O interface 88 provides an interface between the processing component 83 and peripheral interface modules, such as a keyboard, a click wheel, keys, and the like. The keys may include, but are not limited to, a home key, a volume key, a starting key, and a locking key.

The sensor assembly 89 includes one or more sensors to provide status assessment of various aspects of the electronic device 80. For instance, the sensor component 89 may detect an open/closed status of the electronic device 80, relative positioning of components, e.g., the display and the keypad, of the electronic device 80, a change in position of the electronic device 80 or a component of the electronic device 80, a presence or absence of user contact with the electronic device 80, an orientation or an acceleration/deceleration of the electronic device 80, and a change in temperature of the electronic device 80. The sensor component 89 may include a proximity sensor configured to detect the presence of nearby objects without any physical contact. The sensor component 89 may also include a photosensitive sensor, such as a CMOS or CCD image sensor, for use in imaging applications. In some embodiments, the sensor component 89 may also include an accelerometer sensor, a gyroscope sensor, a magnetic sensor, a pressure sensor, or a temperature sensor.

The communication component 810 is configured to facilitate communication, wired or wirelessly, between the electronic device 80 and other devices. The electronic device 80 may access a wireless network based on a communication standard, such as Wi-Fi, 4G or 5G, or a combination thereof. In one exemplary embodiment, the communication component 810 receives a broadcast signal or broadcast associated information from an external broadcast management system via a broadcast channel. In one exemplary embodiment, the communication component 810 further includes a near field communication (NFC) module to facilitate short-range communications. For example, the NFC module can be implemented based on radio frequency identification (RFID) technology, infrared data association (IrDA) technology, ultra-wideband (UWB) technology, Bluetooth (BT) technology and other technologies.

In exemplary embodiments, the electronic device 80 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors or other electronic components, for performing the above described methods.

In exemplary embodiments, there is also provided a non-transitory computer-readable storage medium including instructions, such as the memory 84 including the instructions, and the above instructions may be executed by the processor 820 of the electronic device 80, for prforming the above described methods. For example, the non-transitory computer-readable storage medium may be a ROM, a random access memory (RAM), a CD-ROM, a magnetic tape, a floppy disc, an optical data storage device, and the like.

It is noted that the various modules, sub-modules, units, and components in the present invention can be implemented using any suitable technology. For example, a module may be implemented using circuitry, such as an integrated circuit (IC). As another example, a module may be implemented as a processing circuit executing software instructions.

Other embodiments of the present invention will be apparent to those skilled in the art from consideration of the specification and practice of the present invention disclosed here. The present invention is intended to cover any variations, uses, or adaptations of the invention that follow the general principles of the present invention and include the common knowledge or customary technical means in the technical field that are not disclosed in the present disclosure. The specification and embodiments are considered as exemplary only, with a true scope of the present invention being indicated by the appended claims.

It is to be understood that the present invention is not limited to the precise structures described above and illustrated in the accompanying drawings, and various modifications and changes may be made without departing from the scope thereof. The scope of the present invention is limited only by the appended claims.

## Claims

1. A method for wireless access point deployment, the method being applied to a mobile robot, the method comprising:
in a process of the mobile robot traveling along a moving path determined by an environment map, detecting wireless signal coverage information of each moving position in the moving path,
wherein the wireless signal coverage information is used to generate a wireless signal coverage map of an environment where the mobile robot is currently located, and
the wireless signal coverage map is used to update a deployment position of the wireless access point in the environment.

2. The method according to claim 1, wherein in the process of the mobile robot traveling along the moving path determined by the environment map, detecting the wireless signal coverage information of each moving position in the moving path comprises:
in the process of the mobile robot traveling along the moving path determined by the environment map, detecting a signal strength of each moving position in the moving path;
determining a grid corresponding to each moving position in a grid map, wherein the grid map is determined based on an environment map of the environment where the mobile robot is currently located; and
determining a signal strength corresponding to each grid based on the signal strength of each moving position and the grid corresponding to each moving position.

3. The method according to claim 2, further comprising:
generating a wireless signal coverage heat map corresponding to the grid map based on an intensity value of the signal strength corresponding to each grid in the grid map; and
superimposing the wireless signal coverage heat map with the environment map to obtain the wireless signal coverage map of the environment where the mobile robot is currently located.

4. The method according to claim 2, further comprising:
in response to an update instruction for the wireless signal coverage map, redetermining the signal strength corresponding to each grid in the grid map; and
updating the wireless signal coverage map based on the redetermined grid map.

5. A method for wireless access point deployment, the method being applied to a wireless access point, the method comprising:
acquiring wireless signal coverage information detected by a mobile robot at each moving position during movement; and
determining a wireless signal coverage map of an environment where the mobile robot is currently located based on the wireless signal coverage information detected at each moving position,
wherein the wireless signal coverage map is used to update a deployment position of the wireless access point in the environment.

6. The method according to claim 5, wherein determining the wireless signal coverage map of the environment where the mobile robot is currently located based on the wireless signal coverage information detected at each moving position comprises:
acquiring a grid map corresponding to the environment where the mobile robot is currently located;
based on the wireless signal coverage information detected at each moving position, determining an intensity value of a signal strength corresponding to each grid in the grid map, and generating a wireless signal coverage heat map corresponding to the grid map; and
superimposing the wireless signal coverage heat map with the environment map to obtain the wireless signal coverage map of the environment where the mobile robot is currently located.

7. The method according to claim 5 or 6, further comprising:
determining whether a current deployment position of the wireless access point in the environment meets a signal coverage requirement based on the wireless signal coverage map; and
in response to the current deployment position of the wireless access point not meeting the signal coverage requirement, generating prompt information, wherein the prompt information is used to indicate to update the deployment position of the wireless access point.

8. The method according to claim 7, wherein in response to the current deployment position of the wireless access point not meeting the signal coverage requirement, generating the prompt information comprises:
in response to the current deployment position of the wireless access point not meeting the signal coverage requirement, determining signal strengths of a plurality of positions in the environment based on the wireless signal coverage map; and
according to the signal strengths of the plurality of positions in the environment, determining a target deployment position of the wireless access point, and generating the prompt information, wherein the prompt information is used to indicate the target deployment position of the wireless access point.

9. A method for wireless access point deployment, the method being applied to a terminal device, the method comprising:
acquiring a wireless signal coverage map of an environment where a mobile robot is currently located, wherein the wireless signal coverage map is determined by wireless signal coverage information detected by the mobile robot at each moving position during movement; and
displaying the wireless signal coverage map, wherein the wireless signal coverage map is used to update a deployment position of a wireless access point in the environment.

10. The method according to claim 9, further comprising:
displaying prompt information in the wireless signal coverage map, wherein the prompt information is used to indicate at least one of:
updating the deployment position of the wireless access point; or
a target deployment position of the wireless access point.

11. The method according to claim 10, further comprising:
determining whether a current deployment position of the wireless access point in the environment meets a signal coverage requirement based on the wireless signal coverage map; and
displaying the prompt information in the wireless signal coverage map comprises:
in response to the current deployment position of the wireless access point not meeting the signal coverage requirement, displaying the prompt information in the wireless signal coverage map.

12. The method according to claim 11, wherein in response to the current deployment position of the wireless access point not meeting the signal coverage requirement, displaying the prompt information in the wireless signal coverage map comprises:
in response to the current deployment position of the wireless access point not meeting the signal coverage requirement, determining signal strengths of a plurality of positions in the environment based on the wireless signal coverage map; and
according to the signal strengths of the plurality of positions in the environment, determining the target deployment position of the wireless access point and outputting the prompt information, wherein the prompt information is used to indicate the target deployment position of the wireless access point.

13. An apparatus for wireless access point deployment, the apparatus being applied to a mobile robot, the apparatus comprising:
a detection module, configured to, in a process of the mobile robot traveling along a moving path determined by an environment map, detect wireless signal coverage information of each moving position in the moving path,
wherein the wireless signal coverage information is used to generate a wireless signal coverage map of an environment where the mobile robot is currently located, and
the wireless signal coverage map is used to update a deployment position of the wireless access point in the environment.

14. An apparatus for wireless access point deployment, the apparatus being applied to a mobile access point, the apparatus comprising:
a first acquisition module, configured to acquire wireless signal coverage information detected by a mobile robot at each moving position during movement; and
a determination module, configured to determine a wireless signal coverage map of an environment where the mobile robot is currently located based on the wireless signal coverage information detected at each moving position,
wherein the wireless signal coverage map is used to update a deployment position of the wireless access point in the environment.

15. An apparatus for wireless access point deployment, the apparatus being applied to a terminal device, the apparatus comprising:
a second acquisition module, configured to acquire a wireless signal coverage map of an environment where a mobile robot is currently located, wherein the wireless signal coverage map is determined by wireless signal coverage information detected by the mobile robot at each moving position during movement; and
a display module, configured to display the wireless signal coverage map, wherein the wireless signal coverage map is used to update a deployment position of the wireless access point in the environment.
